# EUROPEAN PATENT SPECIFICATION

(11) **EP 2 543 553 B1**
(45) Date of publication and mention of the grant of the patent: **04.03.2015**
(21) Application number: 12175624.1
(22) Date of filing: 09.07.2012
(51) Int. Cl.: B60R 21/16, B60R 21/215

(54) **Pneumatic and mechanical energy absorber**
Pneumatischer und mechanischer Energieabsorber
Absorbeur d'énergie pneumatique et mécanique

(30) Priority: 07.07.2011 US 201161505138 P; 23.03.2012 US 201261614661 P
(43) Date of publication of application: 09.01.2013
(73) Proprietor: Zodiac Seats France, 36100 Issoudun (FR)
(72) Inventor: Islam, Rakibul, Rancho Cucamonga, CA 91730 (US)
(74) Representative: Phillips & Leigh

(56) References cited:
- EP-A1- 0 849 129
- WO-A1-98/45144
- JP-A- 11 180 398
- US-A1- 2004 007 856
- US-A1- 2011 012 329

## Description

### FIELD OF THE INVENTION

The invention relates to energy absorbers for structure within a vehicle cabin; such as monuments, passenger seats or the like.

### BACKGROUND

In various modes of transportation, many passenger seats are at least partially surrounded by walls or monuments or may be placed behind other passenger seats where items are mounted to the seat back, such as video displays, telephones, shrouds, or other items.

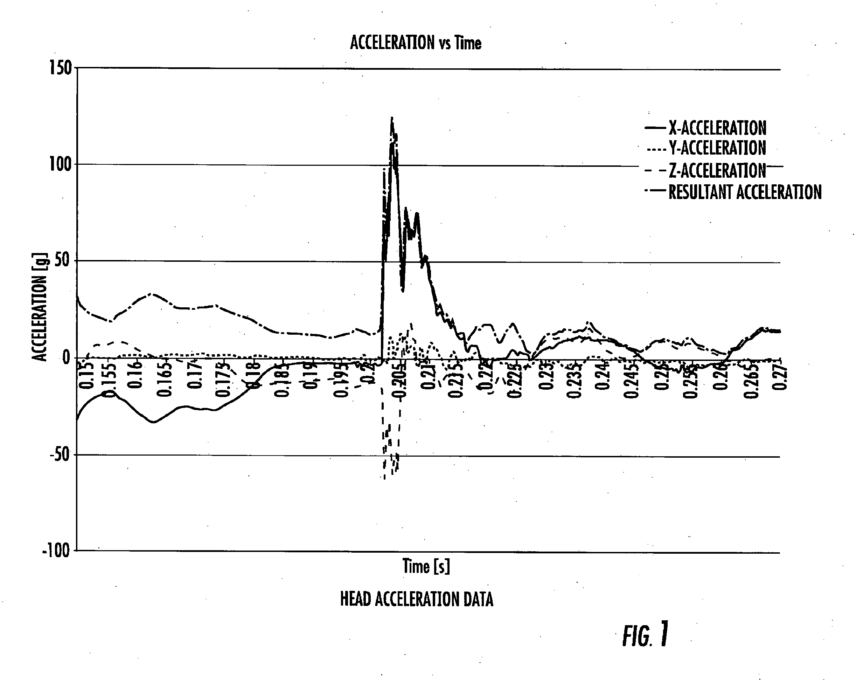

During a minor crash landing, a passenger may be thrown forward so that the passenger's head and/or body strikes these structures due to inertial loads from the event. Typically, these structures are rigid in nature, so as not to provide any energy absorbing or deflecting features. As a result, Figure 1 shows typical head acceleration data on conventional monument designs, which is a measure of the likelihood of a head injury arising from an impact or Head Injury Criterion ("HIC"). As is shown in Figure 1, the higher spikes represent a greater danger of head injury. The current method to address HIC risks has been primarily through spacing to eliminate contact with the structures during the dynamic event. See 14 C.F.R. § 25.562 [Federal Aviation Regulations - Emergency Landing Dynamic Conditions].

Also, some passenger seats have been outfitted with an inflatable bag located in the seat belt to protect the passenger from head injury. However, the seat belt in these cases may be heavy, uncomfortable, and expensive. Furthermore, the success of the seat belt in preventing such injuries is dependent on specific interior layouts and installation.

EP0849129 (Volkswagon AG) relates to side airbags that are mounted under a profile strip along the top inside edge of the vehicle door frame, and are covered in the folded condition by a trim cover. Each airbag is connected to a gas duct by a separate control valve. WO98/45144 (Lear Corp [US]) relates to an airbag device, preferably to a knee airbag housed in the vehicle instrument panel. US2011/0012329 (Sekino Tadaaki) relates to an air-bag device comprising an air-bag inner, an outer cover attached to the air-bag inner, an inflator case to which the air-bag inner is attached, and an inflator for supplying a gas to a hermetically sealed space defined by the air-bag inner and the inflator case, wherein the air-bag inner is provided with a plurality of folded cylinders having their leading ends attached to the outer cover, and the outer cover is moved in the direction in which the cylinders are impact-absorbably expanded by the gas supplied from the inflator.

Thus, it may be desirable to provide internal structures with energy absorbing and/or energy deflecting features within a potential strike zone to reduce and/or control the amount of head acceleration a passenger experiences during a minor crash. It may also be desirable to provide energy absorbing structures that are cost effective by reducing the overall weight of seats that otherwise incorporate inflatable restraints into the seat belts. It may further be desirable to provide energy absorbing structures that reduce the allowable setback for non-contact installations.

### STATEMENT OF INVENTION

An energy absorber and embodiments thereof in accordance with the present invention are defined by the appended claims.

### SUMMARY OF THE INVENTION

Features of the present invention include an energy absorber for a structure within a vehicle cabin comprising:
(a)a plurality of airbags,
(b) an inflator coupled to the plurality of airbags, wherein the inflator comprises a canister and a firing module,
(c) a control module electrically connected to the firing module of the inflator, and
(d) an outer surface positioned adjacent the plurality of airbags, said outer surface comprises a breakable area positioned adjacent the plurality of airbags, said breakable area comprises a weaker coupling to the outer surface on at least a first side and a stronger coupling to the outer surface on at least a second side
characterised in that the energy absorber further comprises a hinge comprising a first end coupled to the breakable area and a second end coupled to a remainder of the outer surface. The structure may be a monument or a passenger seat back. In some features, the outer surface may comprise a plurality of mechanical energy absorbers positioned adjacent the plurality of airbags and coupled to the outer surface.

In other features, the first end and the second end may be connected via a flexible connector. The breakable area may be formed of composite materials, glass fibers, fabric, or Kevlar with resin. The breakable area may also be displaced approximately 2 to 4 inches during inflation of the plurality of airbags.

In certain features, the outer surface may be coupled to the inner surface in a deflector deployed configuration so that a central portion of the outer surface is displaced from the inner surface when the plurality of airbags are inflated or in an absorber deployed configuration so that the outer surface is displaced from the inner surface when the plurality of airbags are inflated. The control module may include integrated logic to monitor for crash scenarios and to deploy the energy absorber when such a scenario is detected.

Features of the present invention may further comprise a monument for a passenger seat comprising an inner surface, an outer surface spaced apart from the inner surface, an energy absorber comprising at least one airbag positioned in the space between the inner surface and the outer surface, an inflator coupled to the at least one airbag, wherein the inflator comprises a canister and a firing module, and a control module electrically connected to the firing module of the inflator, and at least one mechanical energy absorber positioned adjacent the at least one airbag and coupled to the inner surface and the outer surface.

### BRIEF DESCRIPTION OF THE DRAWINGS

Figure 1 is a graph showing typical head accelerations on conventional monument designs.
Figure 2 is a rear perspective view of energy absorbers according to certain features of the present invention positioned within a pair of passenger seat backs, wherein one energy absorber is deployed behind a seat back component and a second energy absorber is deployed in front of a seat back component.
Figure 3 is a perspective view of an airbag of the energy absorber of Figure 2 mounted to an inner surface of a structure.
Figure 4 is a perspective view of the airbag of Figure 3 with an outer surface positioned adjacent the airbag.
Figure 5 is a perspective view of the airbag of Figure 3.
Figure 6 is a perspective view of an inflator of the energy absorber of Figure 2.
Figure 7 is a perspective view of a control module of the energy absorber of Figure 2.
Figure 8 is a perspective view of the control board within the control module of Figure 7.
Figure 9 is a rear perspective view of the pair of passenger seat backs of Figure 2, wherein potential head strike zones are indicated in broken lines.
Figure 10 is a rear perspective view of a passenger seat monument, wherein potential head strike zones are indicated in broken lines.
Figure 11 is a rear perspective view of cabin furniture, wherein a potential head strike zone is indicated in broken lines.
Figure 12 is a rear perspective view of the energy absorber of Figure 2 positioned within a passenger seat monument, wherein the energy absorber is deployed through an outer surface of the passenger seat monument and a potential head strike zone is indicated in broken lines.
Figure 13 is a perspective view of two energy absorbers of Figure 2, wherein one energy absorber is configured to have a deflector deployed configuration and the other energy absorber has an absorber deployed configuration.
Figure 14 is a top perspective view of the energy absorbers of Figure 13.
Figure 15 is a perspective view of the energy absorber of Figure 2 positioned within a structure, wherein the energy absorber is deployed in an absorber deployed configuration and is positioned to form a crash surface for a passenger's entire body.
Figure 16 is a perspective view of two energy absorbers of Figure 2 positioned within a structure, wherein the energy absorbers are deployed in an absorber deployed configuration and are positioned to form a crash surface for a passenger's head and knees.
Figure 17 is a perspective view of the energy absorber of Figure 2 positioned within a structure, wherein the energy absorber is deployed in an absorber deployed configuration and is positioned to form a crash surface for a passenger's head.
Figure 18 is a partial perspective view of a mechanical energy absorber in combination with the energy absorber of Figure 2 , wherein the energy absorber is deployed in an absorber deployed configuration.
Figure 19 is a rear perspective view of the energy absorber of Figure 2 positioned within the passenger seat monument of Figure 10, wherein the energy absorber is deployed in an absorber deployed configuration and a passenger's head is shown striking the energy absorber.
Figure 20 is a partial front perspective view of the energy absorber of Figure 2 positioned within the passenger seat monument of Figure 12, wherein the energy absorber is deployed in an absorber deployed configuration.
Figure 21 is a cross sectional side view of a conventional structure.
Figure 22 is a cross sectional side view of the structure of Figure 21 with the energy absorber of Figure 2 positioned within the structure of Figure 21 and a rear view of a breakable area of an outer surface of the structure of Figure 21.
Figure 23 is a perspective view of the breakable area of Figure 22 coupled to a hinge by bonding.
Figure 24 is a perspective view of the breakable area of Figure 22 coupled to a hinge by sewing.
Figure 25 is a perspective view of the breakable area of Figure 22 coupled to a hinge by mechanical fasteners.
Figure 26 is a perspective view of the breakable area of Figure 22 comprising a plurality of airbags.
Figure 27 is a perspective view of the breakable area of Figure 22 comprising a plurality of airbags.
Figure 28 is a perspective view of the energy absorber of Figure 2 positioned on a structure.
Figure 29 is a graph showing projected reductions in head accelerations on monument designs that incorporate energy absorbers within potential head strike zones.

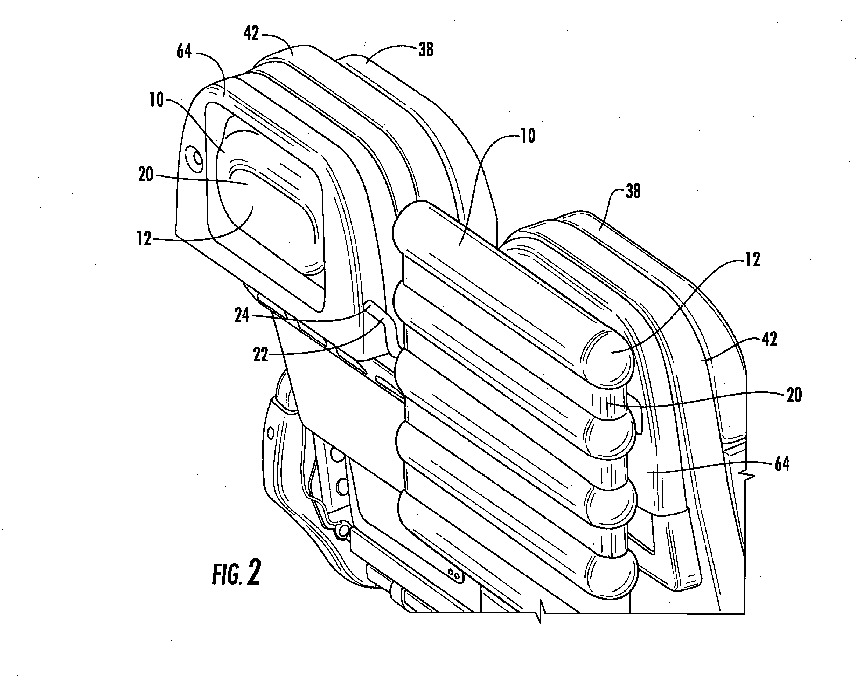

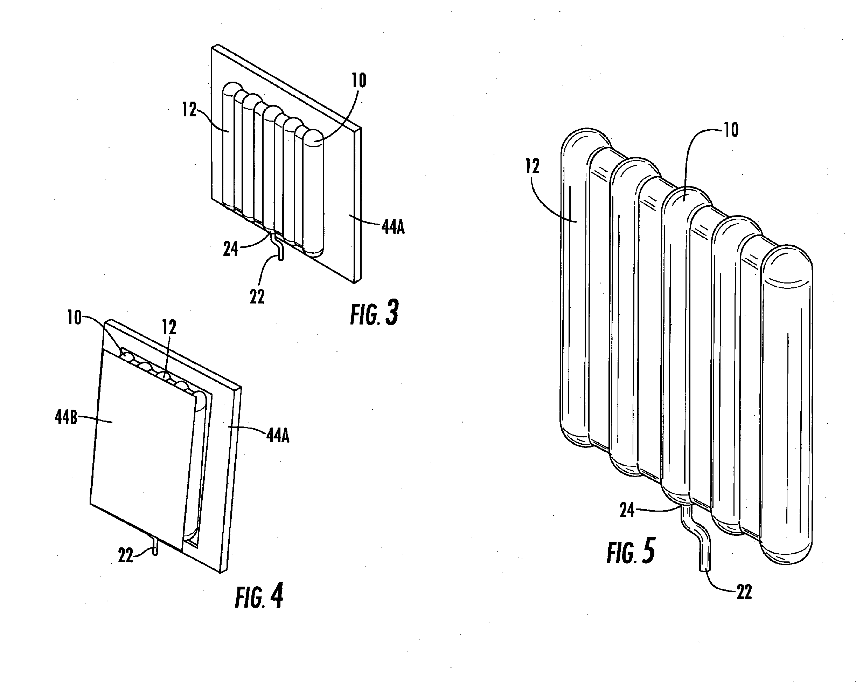

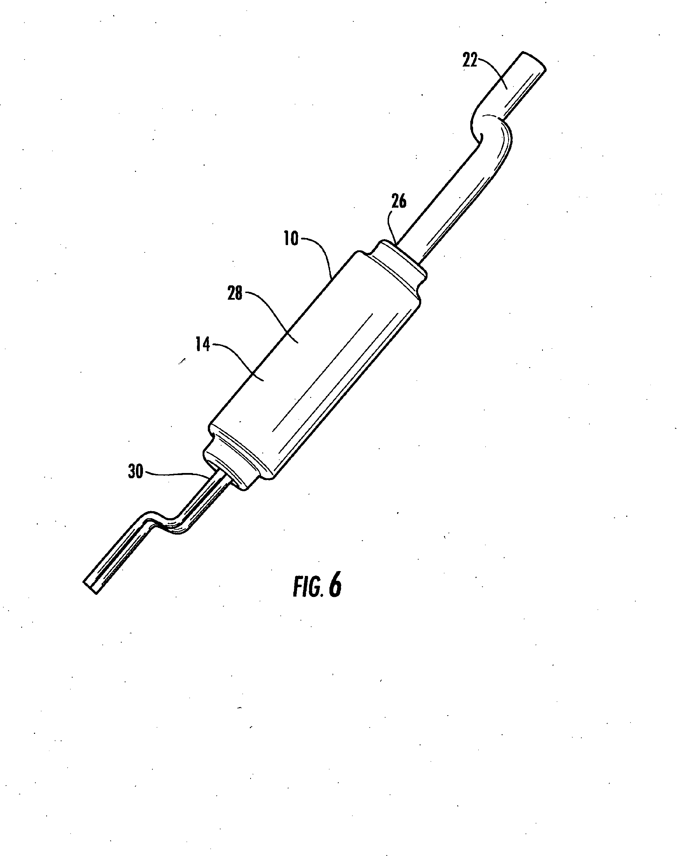

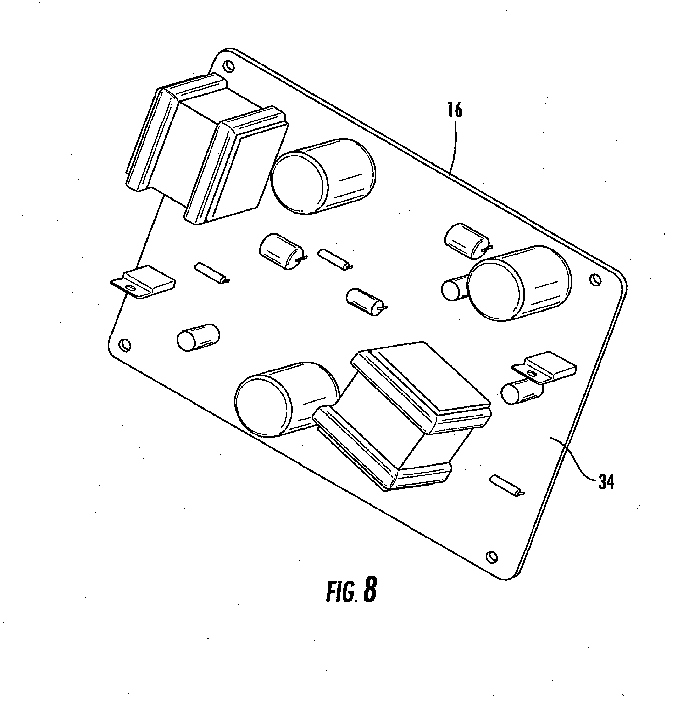

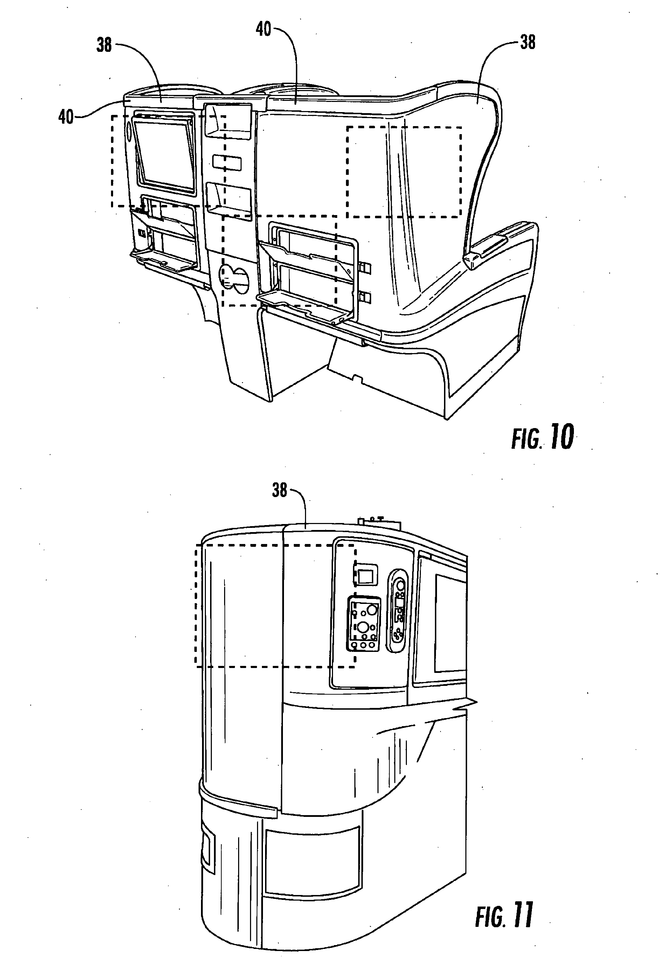

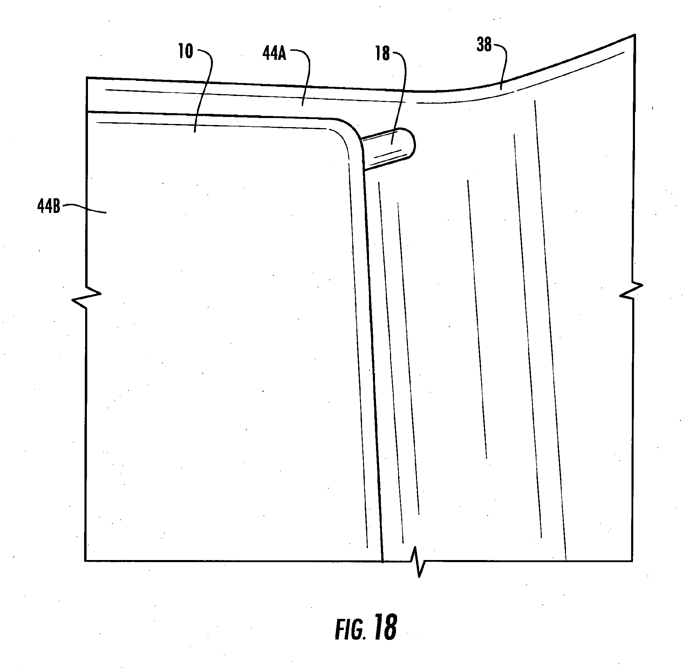

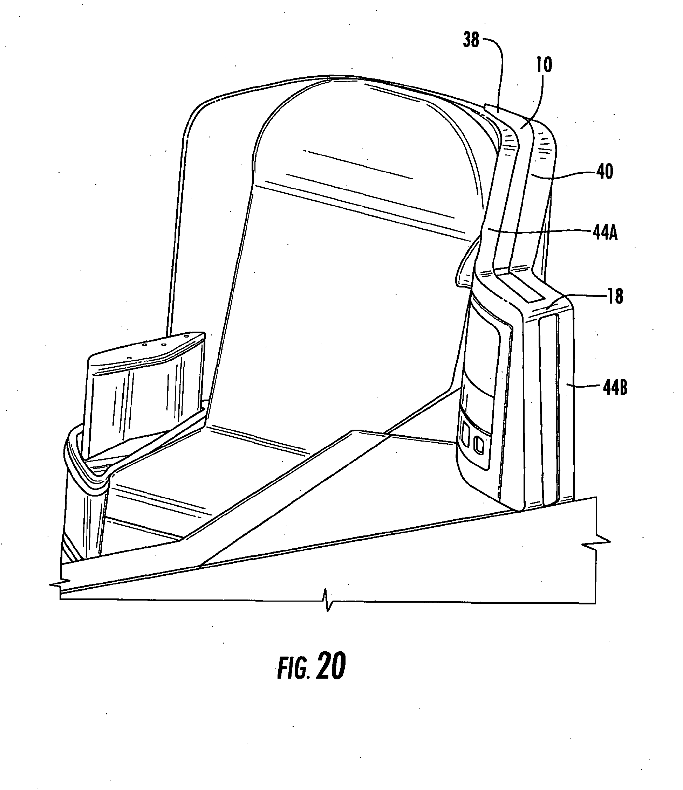

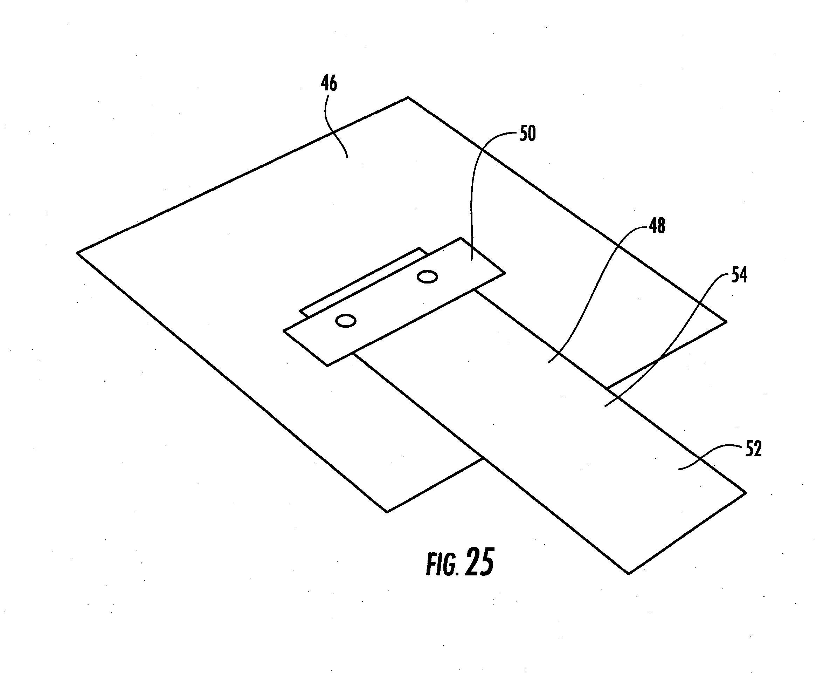

Figures 2 to 5 and Figures 13 to 19 do not form part of the present invention but are retained as relevant technical background. The remaining Figures 1, 6 to 12 and Figures 20 to 29 form part of the present invention in that they relate to the energy absorber comprising a plurality of airbags.

### DETAILED DESCRIPTION

The described features of the invention provide energy absorbers for passenger seats. While the energy absorbers are discussed for use with aircraft seats, they are by no means so limited. Rather, features of the energy absorbers may be used in passenger seats or other seats of any type or otherwise as desired.

Figures 2-20 and 22-28 illustrate features of an energy absorber 10. In these features, the energy absorber 10 comprises at least one airbag 12, an inflator 14, and a control module 16. The energy absorber 10 may further comprise at least one mechanical energy absorber 18. The energy absorber 10 may be formed of standard aerospace and automotive materials including but not limited to composite plastics, aluminum, stainless steel, other metallic materials, composite materials, or other similar materials. Furthermore, the energy absorber 10 may be configured to be formed from minimal parts with a plug and play design to reduce assembly costs.

The airbag 12 may be formed of a thin, nylon fabric or other suitable flexible materials. In some features, as shown in Figures 2-5 and 12, the airbag 12 may include a rectilinear, oval, circular, or other overall deployed shape as needed for the location where the energy absorber 10 is mounted. Furthermore, the airbag 12 may include an indented surface 20. The indented surface 20 may include any suitable configuration that may reduce or control occupant head acceleration, as discussed in more detail below. The airbag 12 may further comprise vent locations to assist with airbag deflation.

As illustrated in Figures 2-6, a gas hose 22 may be coupled to a port 24 in the airbag 12 and to a port 26 of the inflator 14. In some features, the gas hose 22 may be integrally formed with the airbag 12 and/or the inflator 14. In other features, the gas hose 22 may be coupled to the airbag 12 and/or the inflator 14 via any suitable mechanical or chemical fasteners including but not limited to adhesives, adhesion welding, or other suitable fastening methods. In yet other features, the inflator 14 may be coupled directly to the airbag 12 without the need for the gas hose 22.

The inflator 14 may further comprise a canister 28. The canister 28 may be a high pressure gas vessel or other suitable container designed to withstand application of pressure up to 600 bar. The canister 28 may further helium gas to rapidly inflate the airbag 12. However, one of ordinary skill in the relevant art will understand that any suitable chemical composition may be included within the canister 28 that produces a gas that rapidly inflates the airbag 12 within the time period needed. A firing module 30 may be coupled to the inflator 14. The firing module 30 may include a pyrotechnic squib that will break a membrane in order to release the pressurized Helium gas.

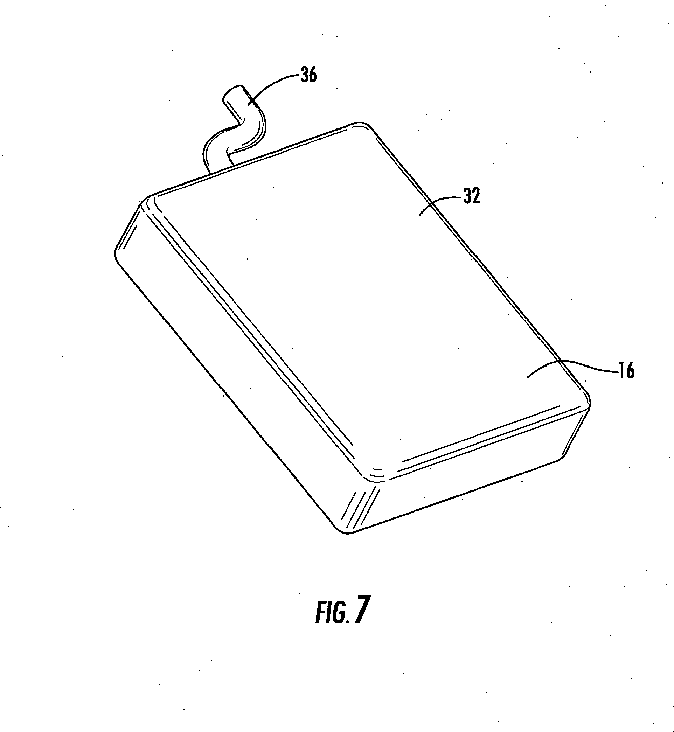

In certain features, as shown in Figures 7-8, the control module 16 may comprise a housing 32, a control board 34, and an electrical harness 36. The control module 16 may be electrically connected to the inflator 14 and the firing module 30 via the electrical harness 36. The housing 32 may be formed of plastics or other suitable materials and may be configured to substantially surround and protect the control board 34. The control board 34 may include a battery for reserve power and inflator firing charge capability. The control board 34 may also include integrated logic to monitor for crash scenarios and to deploy the energy absorber 10 when such a scenario is detected.

According to certain features, as illustrated in Figures 2, 9-12, 15-17, 19-20, 22, and 28, the energy absorber 10 may be positioned within and/or attached to a front of a structure 38. Typical structures 38 may include monuments 40 and/or seat backs 42 or other suitable structures where a passenger's head or other body part may come into contact with hard points of a cabin interior or another seat. Monuments 40 may include but are not limited to class dividers, closets, cabinets, bulkheads, furniture, rigid partitions, or other similar structures. In these features, the energy absorber 10 is shaped and sized to protect a passenger during a crash by guiding the occupant's extremities and/or limiting the energy imparted into the structure 38.

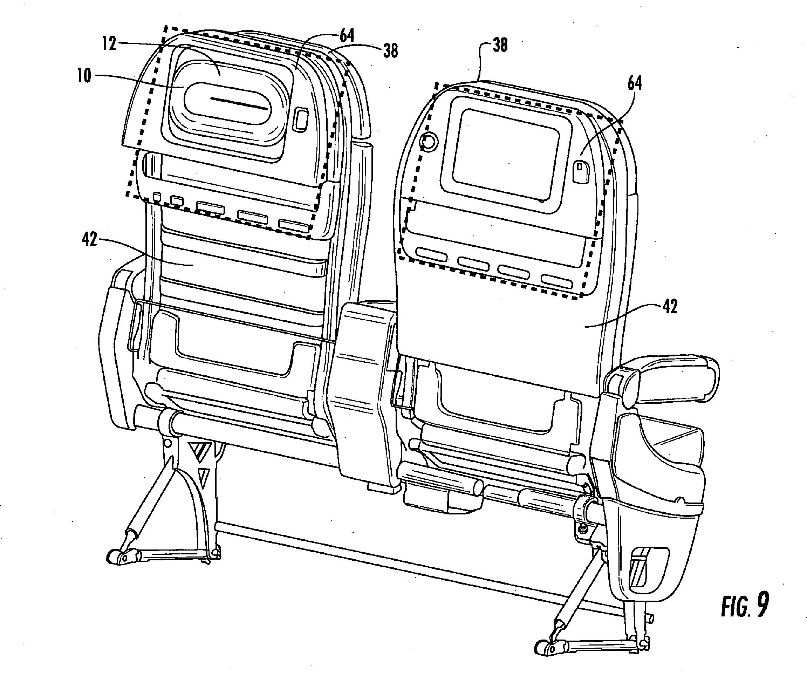

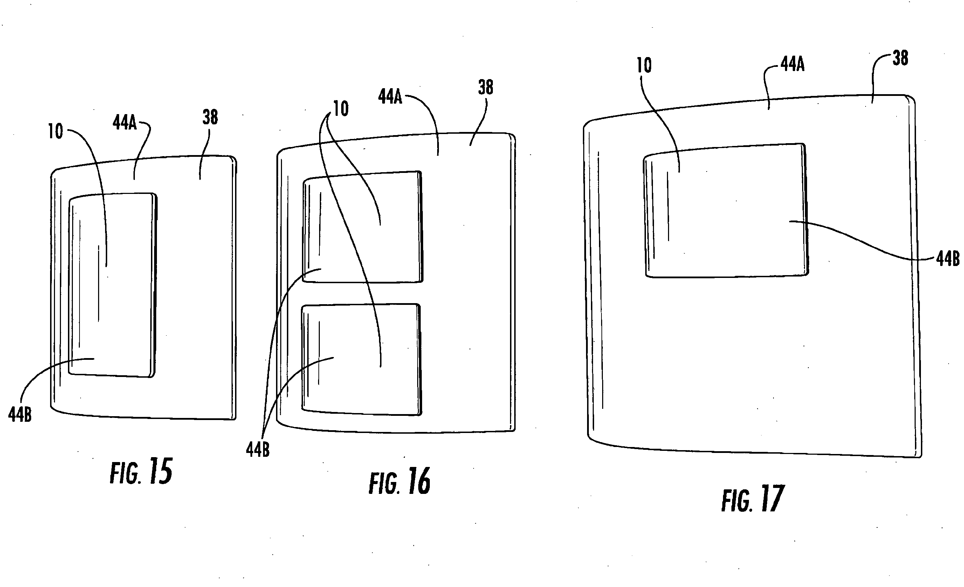

Suitable locations for the energy absorber 10 within or on the structures 38 may include potential head or body strike areas, as indicated by broken line squares in Figures 9-12. The energy absorber 10 may be configured to form a crash surface for a passenger's entire body (Figure 15), head (Figures 16 and 17), knees (Figure 16), or any suitable combination thereof.

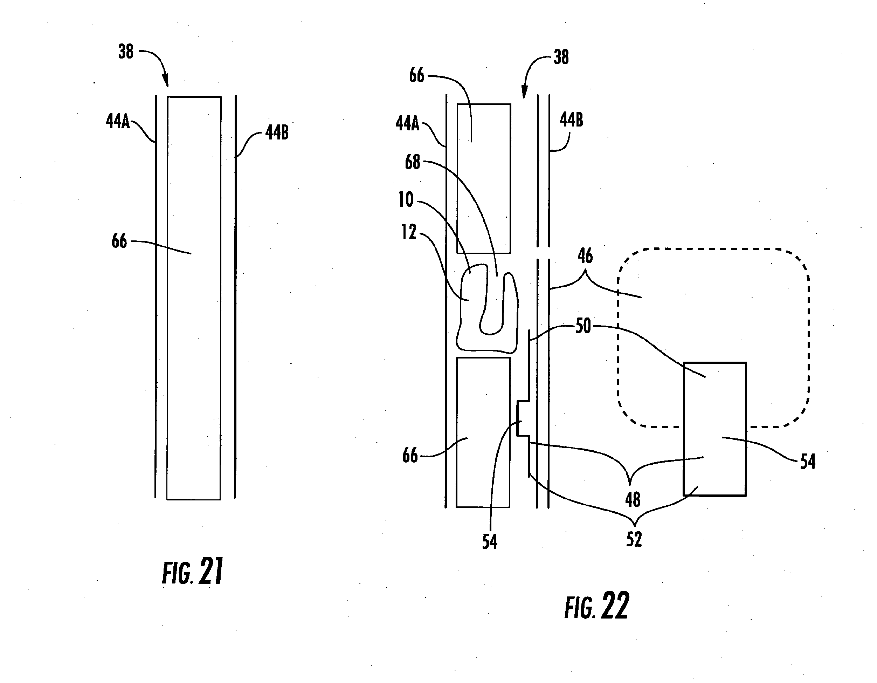

Figure 21 illustrates a typical internal construction of the structure 38. In this construction, an internal material 66, such as a honeycomb structure or other suitable structure that provides sufficient strength and support for the structure 38, is sandwiched between an inner surface 44A and an outer surface 44B. When the energy absorber 10 is positioned within the structure 38, as shown in Figure 22, a portion of the internal material 66 is removed to create a pocket 68 within which the airbag 12 may be stowed.

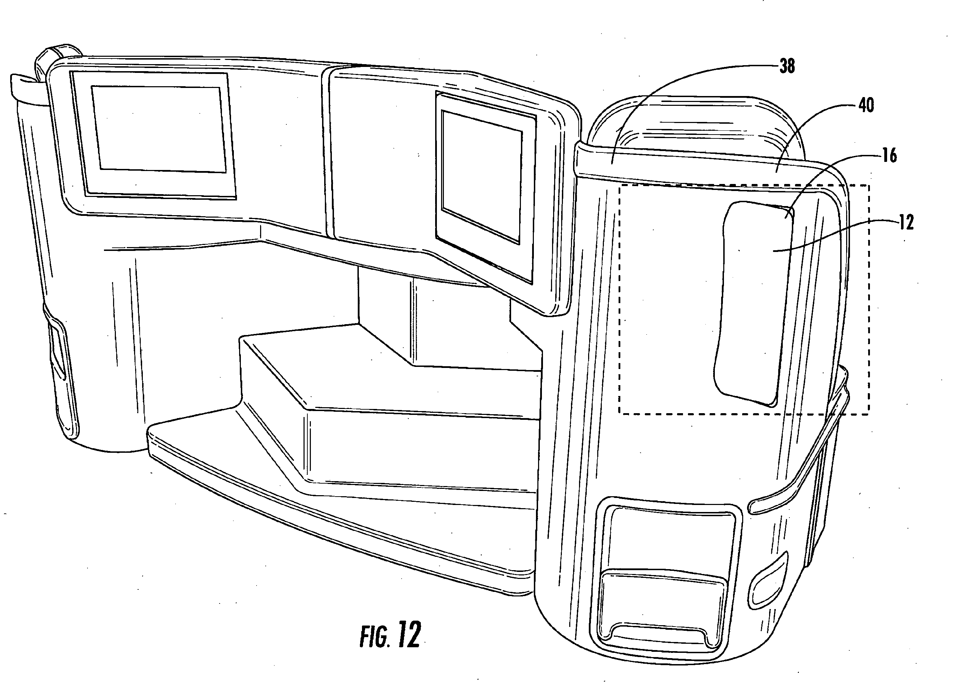

In certain features, in order for the airbag 12 to freely escape the pocket 68, as shown in Figures 12 and 22-25, the outer surface 44B may comprise a breakable area 46 to allow the airbag 12 to deploy through the outer surface 44B. The breakable area 46 may be formed by partially cutting or otherwise weakening the outer surface 44B locally in a shape that that allows the airbag 12 to correctly deploy. The breakable area 46 should retain sufficient strength to withstand ordinary wear and tear usage, while also being configured to break quickly when the airbag 12 is deployed. For example, the breakable area 46 may be formed of composite materials, glass fibers, fabric, Kevlar with resin, or other suitable materials.

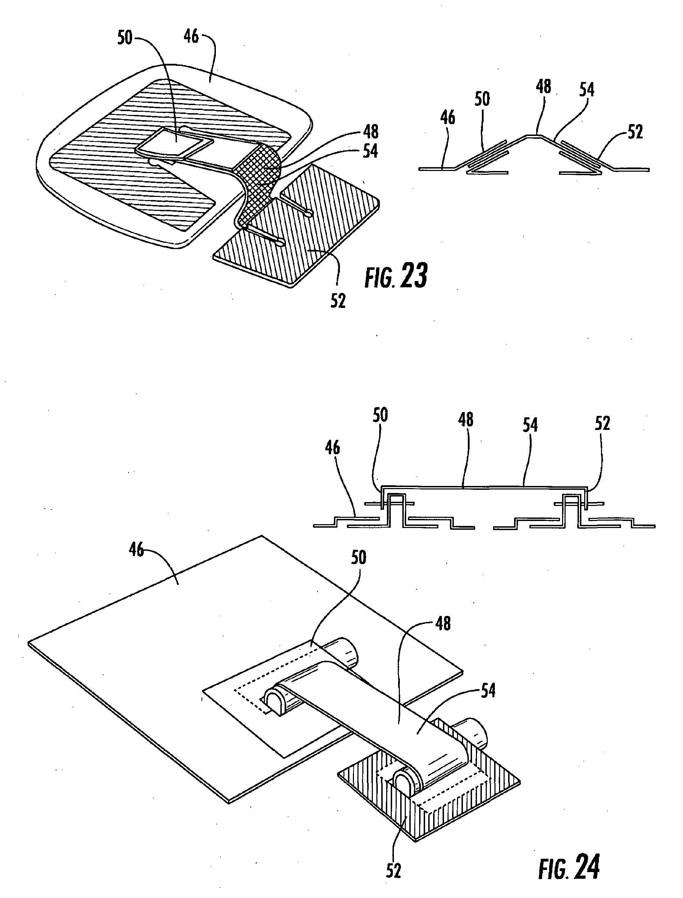

In these features, as illustrated in Figures 22-25, the breakable area 46 may be configured to be weaker on one side and stronger on an opposing side, wherein a first end 50 of a hinge 48 may be coupled to the breakable area 46 and a second end 52 of the hinge 48 may be coupled to a remainder of the outer surface 44B. In certain features, as shown in Figures 23-25, each end of the hinge 48 may be adhered, bonded, sewn, mechanically coupled, or otherwise joined to the breakable area 46 and the outer surface 44B.

As shown in Figures 23-25, the two ends 50, 52 of the hinge 48 may be connected via a flexible connector 54. The flexible connector 54 may comprise a tether or strap or other suitable design that will provide a strong and flexible hinge that will not interfere with the egress of the airbag 12 during deployment. In certain features, the hinge 48 may be positioned at a lower side of the breakable area 46 so that the breakable area 46 rotates down and out of the way of the airbag 12 during deployment. However, one of ordinary skill in the relevant art will understand that the hinge 48 may have any suitable design and/or position that allows the airbag 12 to deploy without interference.

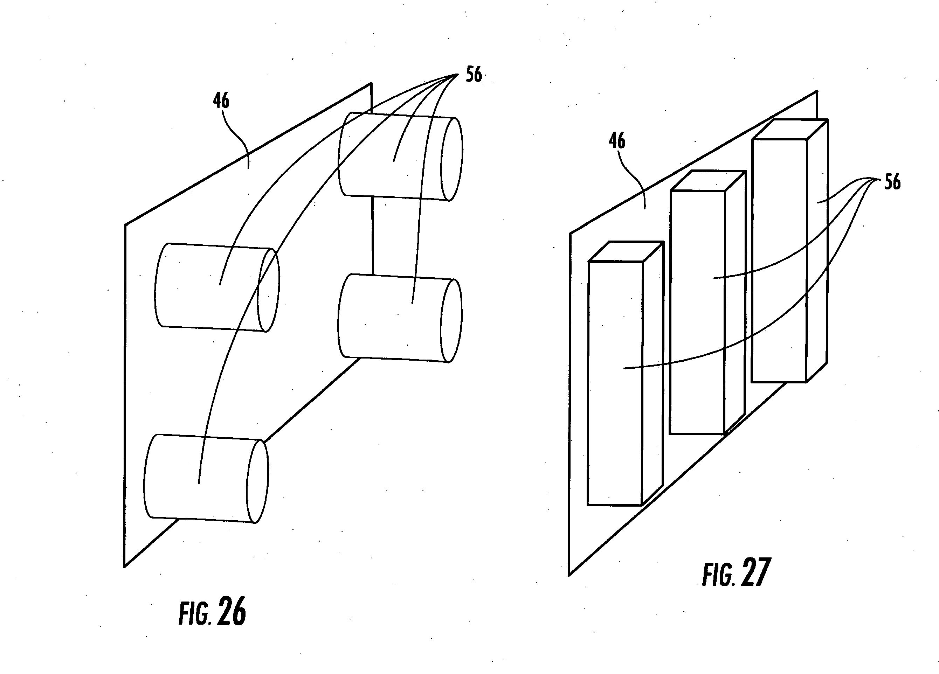

In certain features, as illustrated in Figures 26-27, the breakable area 46 may comprise one or more small airbags 56 mounted to its surface and connected together with tubes. The airbags 56 may be positioned in any suitable location and in any suitable number on the breakable area 46. By incorporating a plurality of airbags 56 with the breakable area 46 in strategic locations, the amount of volume needed for the airbags 56 may be reduced, while providing crash protection for the breakable area 46 surface. In other words, the breakable area 46 may comprise a surface area that is greater than an inflated surface area of the airbags 56 so that the breakable area 46 forms part of the absorbing surface.

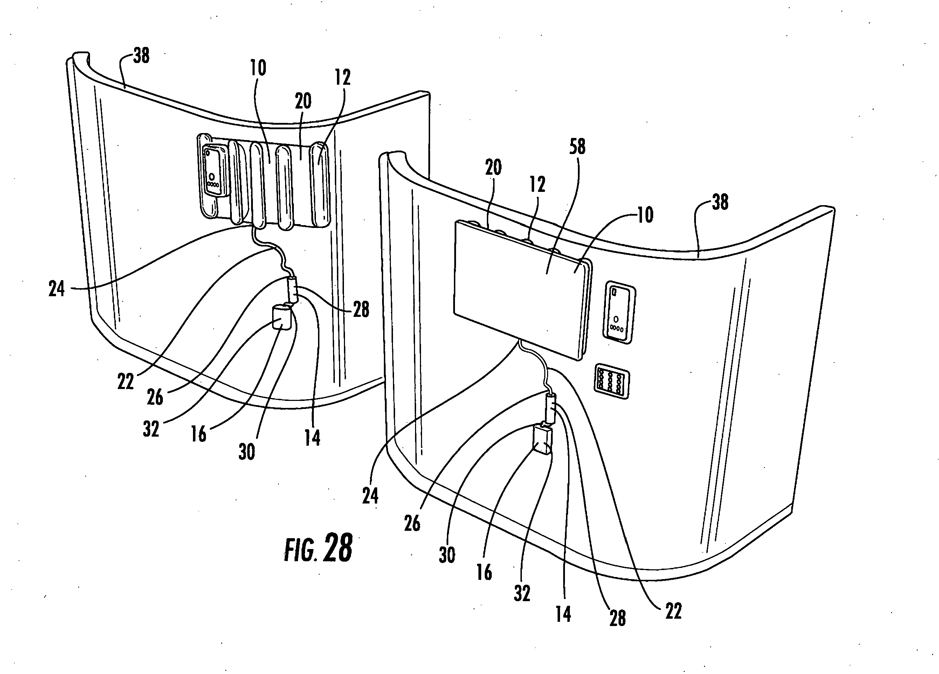

Furthermore, as best illustrated in Figure 28, the energy absorber 10 may be configured to be mounted to and/or extend through the outer surface 44B prior to deployment. In these features, a cover 58 may also be positioned over and coupled to the airbag 12, which may also comprise the plurality of airbags 56 as described above. Thus, the cover 58 may serve a similar purpose as the breakable area 46 without the need for the airbag 12 to deploy through the outer surface 44B.

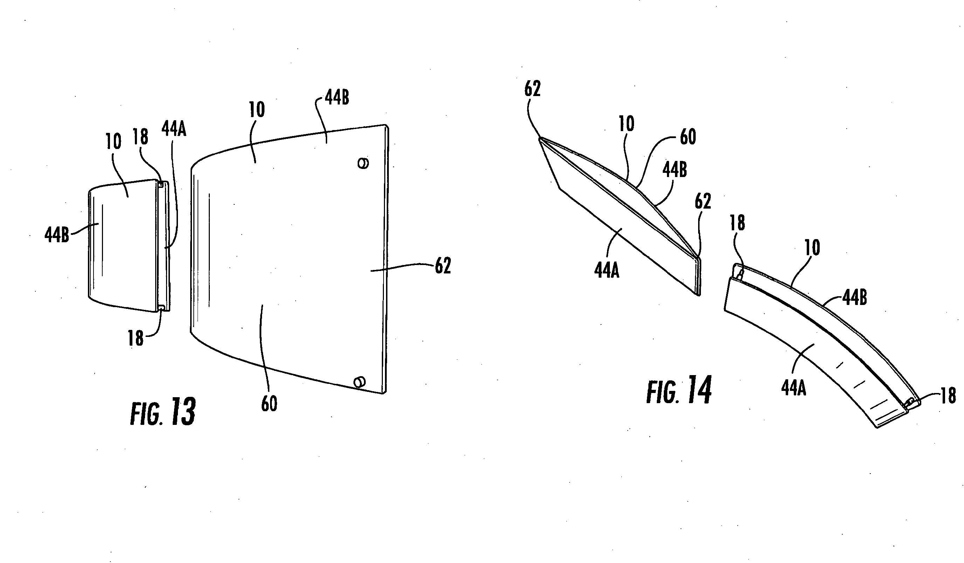

In certain features, as illustrated in Figures 13-18, the energy absorber 10 and the outer surface 44B may have a deflector deployed configuration or an absorber deployed configuration. In the deflector deployed configuration, as best illustrated in Figures 13-14, the energy absorber 10 may be configured so that the airbag 12 causes a central portion 60 of the outer surface 44B to be displaced from the inner surface 44A when the airbag is inflated, while edges 62 of the outer surface remain substantially proximate the inner surface 44A. As a result, when the energy absorber 10 is deployed, the central portion 60 of the outer surface 44B may be displaced approximately 5 to 10cm (2 to 4 inches) (or any other suitable distance needed to absorb energy) during inflation, thus forming a cushioned chamber between the two surfaces 44A, 44B to reduce and/or control passenger head acceleration.

In the absorber deployed configuration, as best illustrated in Figures 13-19, the energy absorber 10 in combination with the mechanical energy absorbers 18 may be positioned between the surfaces 44A, 44B. The mechanical energy absorbers 18 may be configured to cause the entire outer surface 44B to be displaced from the inner surface 44A when the airbag 12 is inflated. For example, the mechanical energy absorbers 18 may include a telescoping design that is compressed prior to deployment so that the outer surface 44B is positioned proximate the inner surface 44A and/or the internal material 66, but expands when the airbag 12 inflates and locks into the expanded position, thereby forming a pocket between the inner surface 44A and the outer surface 44B so that the outer surface 44B remains displaced from the inner surface 44A after the airbag 12 deflates.

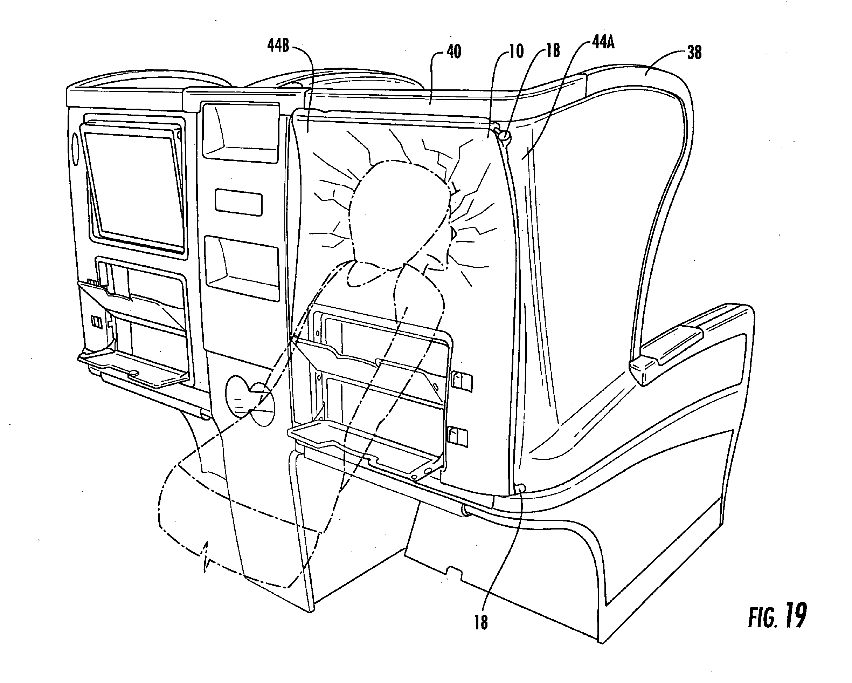

In certain features, the mechanical energy absorbers 18 may be positioned adjacent the corners of the outer surface 44B. However, one of ordinary skill in the relevant art will understand that the mechanical energy absorbers 18 may be placed in any suitable location and in any suitable numbers to allow the outer surface 44B to be displaced as needed. As a result, when the energy absorber 10 is deployed, the entire outer surface 44B may be displaced approximately 2 to 4 inches (or any other suitable distance needed to absorb energy) during inflation, thus forming a cushioned chamber between the two surfaces 44A, 44B to reduce and/or control passenger head acceleration. For example, Figure 19 illustrates a passenger's head crashing into a deployed outer surface 44B in an absorber deployed configuration. The space created between the outer surface 44B and the inner surface 44A allows for impact absorption from the passenger's head strike, which in turn lowers the passenger's head acceleration.

In the features where the energy absorber 10 is attached to the seat back 42, as shown in Figures 2, 9, 10, and 19, the airbag 12 may be positioned behind or in front of a component 64, such as a video display or other passenger accessory or entertainment device. The inflator 14 may be integrated into the seat back 42 frame. The control module 16 may also be installed on the seat back 42 frame to minimize wiring and to ensure modularity. The airbag 12 may be deployed behind or in front of the component 64, as illustrated in Figure 2.

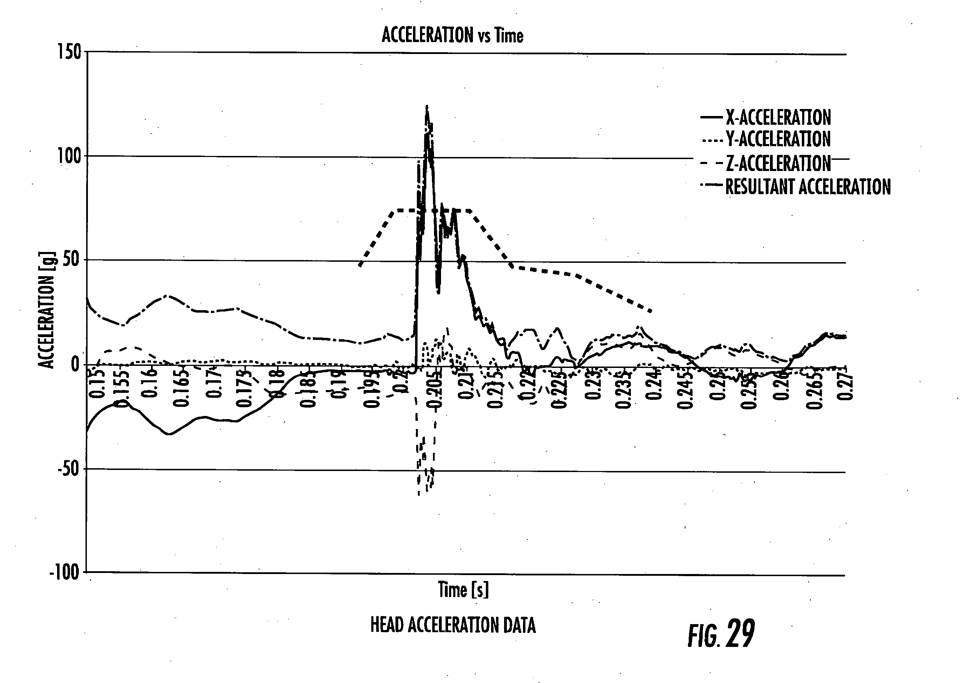

Figure 29 illustrates head accelerations experienced on structures 38 having energy absorbers 10 installed within the head strike zones. As shown in Figure 29, the incorporation of the energy absorbers 10 reduces the highest spikes in acceleration and also provides better control and predictability over the head acceleration values that would be experienced in the event of a minor crash. Furthermore, incorporation of the energy absorbers 10 into structures 38 also reduces the allowable setback for non-contact installations.

The foregoing is provided for purposes of illustrating, explaining, and describing features of the present invention. Further modifications and adaptations to these features will be apparent to those skilled in the art and may be made without departing from the scope of the invention.

## Claims

1. An energy absorber (10) for a structure within a vehicle cabin comprising:
(a) a plurality of airbags (56);
(b) an inflator (14) coupled to the plurality of airbags (56), wherein the inflator comprises a canister and a firing module;
(c) a control module (16) electrically connected to the firing module of the inflator; and
(d) an outer surface (44B) positioned adjacent the plurality of airbags (56), said outer surface (44B) comprising a breakable area (46) positioned adjacent the plurality of airbags (56), said breakable area comprises a weaker coupling to the outer surface on at least a first side and a stronger coupling to the outer surface on at least a second side;
**characterised in that** the energy absorber (10) further comprises a hinge (48) comprising a first end (50) coupled to the breakable area (46) and a second end (52) coupled to a remainder of the outer surface (44B).

2. The energy absorber of claim 1, wherein the outer surface (44B) has a surface area that is greater than an inflated surface area of the plurality of airbags.

3. The energy absorber of any of the claims 1 to 3, wherein the first end (50) and the second end (52) of the hinge (48) are connected to one another via a flexible connector (54).

4. The energy absorber of claim 3, wherein the flexible connector (54) is a tether or a strap so as to provide the hinge (48) as a flexible hinge.

5. The energy absorber of any of the claims 1 to 4, wherein the hinge (48) is positioned at a lower side of the breakable area (46) so that the breakable area (46) rotates down and out of the way during deployment of the plurality of airbags.

6. The energy absorber (10) of any of the claims 2 to 5, further comprising an inner surface (44A), said outer surface (44B) is spaced apart from the inner surface (44A) and said plurality of airbags (56) are positioned in the space between the inner surface and the outer surface.

7. The energy absorber of any of the preceding claims, wherein the breakable area (46) is formed of composite materials, glass fibers, fabric, or Kevlar with resin.

8. The energy absorber of any of preceding claims, wherein the control module (16) comprises integrated logic to monitor for crash scenarios and to deploy the energy absorber when such a scenario is detected.

9. The energy absorber of any of the preceding claims, wherein the structure is a monument (40) or/for a passenger seat back (42).

## Patentansprüche

1. Ein Energieabsorber (10) für eine Struktur innerhalb einer Fahrzeugkabine enthaltend:
(a) eine Vielzahl von Prallsäcken (56);
(b) einen Gasgenerator (14), der mit der Vielzahl von Prallsäcken (56) gekoppelt ist, wobei der Gasgenerator einen Behälter und ein Zündmodul aufweist;
(c) ein Steuermodul (16), das elektrisch mit dem Zündmodul des Gasgenerators verbunden ist; und
(d) eine äußere Fläche (44B), die der Vielzahl von Prallsäcken (56) benachbart ist, wobei die äußere Fläche (44B) einen bruchempfindlichen Bereich (46) aufweist, der der Vielzahl von Prallsäcken (56) benachbart ist, wobei der bruchempfindliche Bereich eine schwächere Verbindung zu der äußeren Fläche auf mindestens der ersten Seite und eine stärkere Verbindung zu der äußeren Fläche auf mindestens der zweiten Seite aufweist;
**dadurch gekennzeichnet, dass** der Energieabsorber (10) weiterhin ein Scharnier (48) aufweist enthaltend ein erstes Ende (50), das an den bruchempfindlichen Bereich (46) gekoppelt ist, und ein zweites Ende (52), das an einen Rest der äußeren Fläche (46) gekoppelt ist.

2. Der Energieabsorber gemäß Anspruch 1, wobei die äußere Fläche (44B) einen Oberflächenbereich aufweist, der größer ist als der entfaltete Oberflächenbereich der Vielzahl der Prallsäcke.

3. Der Energieabsorber gemäß Anspruch 1 oder 2, wobei das erste Ende (50) und das zweite Ende (52) des Scharniers (48) mittels eines flexiblen Verbindungsstückes (54) miteinander verbunden sind.

4. Der Energieabsorber gemäß Anspruch 3, wobei das flexible Verbindungsstück (54) ein Gurt oder ein Band ist, um das Scharnier (48) als flexibles Scharnier darzustellen.

5. Der Energieabsorber gemäß irgendeinem der Ansprüche 1 bis 4, wobei das Scharnier (48) an einem unteren Bereich des bruchempflindlichen Bereiches (46) positioniert ist, so dass sich der bruchempfindliche Bereich (46) nach unten und während der Auslösung der Vielzahl von Prallsäcken aus dem Weg dreht.

6. Der Energieabsorber (10) gemäß irgendeinem der Ansprüche 2 bis 5, weiterhin enthaltend eine innere Fläche (44A), wobei die äußere Fläche (44B) von der inneren Fläche (44A) beabstandet ist und die Vielzahl von Prallsäcken (56) innerhalb des Raumes zwischen der inneren Oberfläche und der äußeren Oberfläche positioniert ist.

7. Der Energieabsorber gemäß irgendeinem der vorherigen Ansprüche, wobei der bruchempfindliche Bereich (46) aus Verbundmaterialien, Glasfasern, Gewebe oder Kevlar mit Kunstharz gefertigt ist.

8. Der Energieabsorber gemäß irgendeinem der vorherigen Ansprüche, wobei das Steuermodul (16) eine integrierte Logik enthält, um Unfallszenarien zu überwachen und den Energieabsorber auszulösen, wenn ein solches Szenario detektiert wird.

9. Der Energieabsorber gemäß irgendeinem der vorherigen Ansprüche, wobei die Struktur ein Bauelement (40) ist oder eine Rückenlehne eines Fahrgastsitzes (42) darstellt.

## Revendications

1. Absorbeur d'énergie (10) pour une structure à l'intérieur d'une cabine de véhicule comprenant :
(a) une pluralité de coussins gonflables (56) ;
(b) un gonfleur (14) couplé à la pluralité de coussins gonflables (56), dans lequel le gonfleur comprend un récipient métallique et un module d'amorçage ;
(c) un module de commande (16) raccordé électriquement au module d'amorçage du gonfleur ; et
(d) une surface externe (44B) positionnée de façon adjacente à la pluralité de coussins gonflables (56), ladite surface externe (44B) comprenant une zone cassable (46) positionnée de façon adjacente à la pluralité de coussins gonflables (56), ladite zone cassable comprend un affaiblissement couplé à la surface externe sur au moins un premier côté et un renforcement couplé à la surface externe sur au moins un deuxième côté ;
**caractérisé en ce que** l'absorbeur d'énergie (10) comprend en outre une charnière (48) comprenant une première extrémité (50) couplée à la zone cassable (46) et une deuxième extrémité (52) couplée à un restant de la surface externe (44B).

2. Absorbeur d'énergie selon la revendication 1, dans lequel la surface externe (44B) a une zone de surface qui est plus grande qu'une zone de surface gonflée de la pluralité de coussins gonflables.

3. Absorbeur d'énergie selon l'une quelconque des revendications 1 à 3, dans lequel la première extrémité (50) et la deuxième extrémité (52) de la charnière (48) sont raccordées l'une à l'autre par l'intermédiaire d'un raccord souple (54).

4. Absorbeur d'énergie selon la revendication 3, dans lequel le raccord souple (54) est une longe ou une sangle de fixation de manière à fournir la charnière (68) comme charnière souple.

5. Absorbeur d'énergie selon l'une quelconque des revendications 1 à 4, dans lequel la charnière (48) est positionnée sur un côté inférieur de la zone cassable (46) de sorte que la zone cassable (46) pivote vers le bas et en dehors du chemin pendant le déploiement de la pluralité de coussins gonflables.

6. Absorbeur d'énergie (10) selon l'une quelconque des revendications 2 à 5, comprenant en outre une surface interne (44A), ladite surface externe (44B) est espacée de la surface interne (44A) et ladite pluralité de coussins gonflables (56) sont positionnés dans l'espace entre la surface interne et la surface externe.

7. Absorbeur d'énergie selon l'une quelconque des revendications précédentes, dans lequel la zone cassable (46) est formée de matériaux composites, fibres de verre, tissu, ou de Kevlar avec de la résine.

8. Absorbeur d'énergie selon l'une quelconque des revendications précédentes, dans lequel le module de commande (16) comprend une logique intégrée pour surveiller des scénarios de crash et pour déployer l'absorbeur d'énergie lorsqu'un tel scénario est détecté.

9. Absorbeur d'énergie selon l'une quelconque des revendications précédentes, dans lequel la structure est un monument (40) ou / pour un dossier de siège passager (42).
